**Europäisches Patentamt**

**European Patent Office**

**Office européen des brevets**

(19)

(11) Publication number : **0 580 420 A1**

## (12) EUROPEAN PATENT APPLICATION

(21) Application number : **93305739.0**

(22) Date of filing : **21.07.93**

(51) Int. Cl.⁵ : **G11B 7/125, G11B 7/00**

(30) Priority : **24.07.92 JP 218646/92**

(43) Date of publication of application :
**26.01.94 Bulletin 94/04**

(84) Designated Contracting States :
**DE FR GB**

(71) Applicant : **SONY CORPORATION**
**6-7-35 Kitashinagawa Shinagawa-ku**
**Tokyo 141 (JP)**

(72) Inventor : **Udagawa, Osamu, c/o Intellectual**
**Property Div.**
**Sony Corporation, 6-7-35 Kitashinagawa**
**Shinagawa, Tokyo 141 (JP)**
Inventor : **Iimura, Shinichiro, c/o Intellectual**
**Property Div.**
**Sony Corporation, 6-7-35 Kitashinagawa**
**Shinagawa, Tokyo 141 (JP)**

(74) Representative : **Targett, Kenneth Stanley et al**
**D. Young & Co., 21 New Fetter Lane**
**London EC4A 1DA (GB)**

(54) **Optical disc system.**

(57)   An optical disc system records a desired data, particularly using a write once read many optical disc, so that the life time of the light source can be extended.

An optical disc system controls the pulse width control circuit 72 on the basis of the asymmetry detecting results (48). Thus, the radiation time of the light beam L1 is controlled such that the asymmetry is kept to the optimum value.

FIG. 1

EP 0 580 420 A1

This invention relates to an optical disc system and is suitable, particularly, for a system which records desired information by using the write once read many (WORM) optical disc.

Specifically, in the write once read many optical disc, pits are formed by radiating light beam to a thin film of an organic colouring matter type so as to record the desired information for once.

Moreover, such type of optical disc having pits in this manner can be reproduced by means of an ordinary compact disc player. Therefore, in the case of a small amount of production with the optical disc system, the optical disc, which can be reproduced by means of a compact disc player, can be provided without taking the trouble to make a stamper one by one.

In doing this, in this thin film of organic colouring matter type, there is a case where the size of the pits formed is different among the optical discs, even if the light beam is radiated with the same quantity of light, due to the difference of the characteristic, for instance, among the manufacturers.

For this reason, in this type of optical disc, the predetermined area of the innermost periphery is designated as the area for adjusting the quantity of light (hereinafter, referred to as the "testing area") and the quantity of light of the light beam is adjusted by radiating the light beam to this area previously, so as to form the pits surely.

That is, in the optical disc system, after the optical pick-up is previously moved into the testing area, the quantity of the radiated light beam is sequentially changed and is radiated intermittently.

At this time, in the optical disc system, the period that the light beam is radiated and the period that the radiation of the light beam is stopped are maintained to equal.

Following this radiation of the light beam, the optical disc system switches its mode into the reproduction mode and radiates the light beam to the testing area, and then detects the reflected light.

Therefore, in the optical disc system, by monitoring the reproduced signal, such the quantity of light that the length of the pit and the land area become equal each other (at this time, there is the quantity of light by which the asymmetry becomes optimum) is detected. Here, the asymmetry indicates the ratio of the length of the pit formed on the optical disc sequentially and the length of the land neighbouring with the pit, and the optimum asymmetry is obtained when said ratio is, for example, 1:1.

Hence, in this type of optical disc system, the desired information is recorded in the recording area on the outer periphery with this quantity of light.

However, when the quantity of light is controlled in such a manner that the asymmetry is optimum, there is a problem that, in the laser diode emitting the light beam, it is necessary to increase the quantity of light, and this results to a short life time due to this increase.

If the life time of this laser diode is expanded, the reliability of this type of optical disc system can be improved.

In accordance with one aspect of the present invention, there is provided an optical disc system 1 for forming pits P on a data recording plane sequentially and recording desired information by radiating a light beam L1 of a predetermined quantity of light to the data recording plane of an optical disc 2, comprises: a light source 10 for emitting a light beam L1; optical systems 12, 14, 16, and 22 for focusing the light beam L1 to the data recording plane and for receiving the reflected light L2 of the light beam L1; a light receiving element 24 for receiving the reflected light L2 received at the optical systems 12, 14, 16, and 22 and for outputting the received results RF; an asymmetry detecting means 48 for detecting the asymmetry of the pits P on the basis of the received results RF and for outputting the asymmetry detected results; and control circuits 8, 44 and 72 for controlling the pulse width of the light beam L1 on the basis of the asymmetry detected results such that the asymmetry is optimum value. The asymmetry detecting means 48 contains a reproduction asymmetry detecting means 48 for outputting, in the reproduction mode, the asymmetry detected results on the basis of the output signal RF of the light receiving element 24. The control circuits 8, 44, and 72 change the pulse width by controlling the whole operation, radiate the light beam L1 to the optical disc 2 to form the pits P sequentially, and thereafter, switch the whole operation mode into the reproduction mode. Then, the control circuits 8, 44, and 72 select and set the pulse width on the basis of the asymmetry detected results of the reproduction asymmetry detecting means 48 such that the asymmetry is the optimum value, and the pits P is sequentially formed on the basis of the selected pulse width on data recording.

In accordance with another aspect of the present invention there is provided an optical disc system 1 for forming pits P on a data recording plane sequentially and for recording desired information by radiating the light beam L1 of a predetermined quantity of light to the data recording plane of an optical disc 2, comprises: a light source 10 for emitting a light beam L1; optical systems 12, 14, 16, and 22 for focusing the light beam L1 to the data recording plane and for receiving the reflected light L2 of the light beam L1; a light receiving element 24 for receiving the reflected light L2 received at the optical systems 12, 14, 16, and 22 and for outputting the received results RF; an asymmetry detecting means 40 and 42 for detecting the asymmetry of the pits P on the basis of the received results RF and for outputting the asymmetry detected results; and control circuits 8, 44, and 72 for controlling the pulse width of the light beam on the basis of the asymmetry detected results so that the asymmetry is the optimum value. The asymmetry detecting means 40 and 42 contain a recording asymmetry detecting means 40 and 42 for outputting the asymmetry detected results on data recording, on the basis of the output signal RF of the light receiving element 24. The control circuits 8, 44, and 72 control, on data recording, the pulse width of the light beam L1 on the basis of the recording asymmetry detected results 40 and 42 so that the asymmetry is the optimum value.

Furthermore, the control circuits 8, 44, and 72 of the present invention comprise: a pulse signal generating means 76, 78, and 80 for generating a variable pulse-length signal S2 shorter than the pulse signal of the recording signal EFM for the predetermined period; a delay means 82 which delays the variable pulse-length signal S2 for a predetermined delay time (T+α) and outputs a delay signal S3, and then switches the delay time (T+α) in accordance with the asymmetry detected results; and a light source control means 84 which forms an OR signal S4 of the variable pulse-length signal S2 and the delay signal S3 and controls the light source 10 on the basis of the OR signal S4.

After the pulse width is changed to form the pits P, in the reproduction mode, the asymmetry detected results is obtained on the basis of the output signal RF of the light receiving element 24, and the pulse width is selected and set on the basis of this asymmetry detected results so that the asymmetry is the optimum value. Then, the pits P is sequentially formed on the basis of the selected pulse width, on data recording, so that the fluctuation of the quantity of the light beam L1 is reduced and the asymmetry can be kept to the optimum value.

Moreover, on data recording, the asymmetry detected results is obtained on the basis of the output signal RF of the light receiving element 24. Then, the pulse width of the light beam L1 is controlled on the basis of the asymmetry detected results so that the asymmetry is the optimum value. Therefore, the fluctuation of the quantity of the light beam L1 is reduced and the asymmetry can be kept to the optimum value.

At this time, the variable pulse-length signal S2, which is shorter than the pulse width of the recording signal EFM by a predetermined period is generated. The variable pulse-length signal S2 is delayed for a predetermined delay time (T+α), and a OR signal S4 is obtained between the variable pulse-length signal S2 and the delay signal S3. Then, this delay time (T+α) is changed in accordance with the asymmetry detected results, and at the same time, the light source 10 is controlled on the basis of the OR signal S4 so that the pulse width of the light beam L1 can be controlled easily.

At least in an embodiment of the present invention, the pulse width of the light beam is controlled and kept such that the asymmetry is to the optimum value, as a result an optical disc system in which the quantity of the light beam can be reduced and by this reduction, life time of the light source can be extended, can be provided.

The invention will now be more particularly described, by way of illustrative and non-limiting example, with reference to the accompanying drawings, in which:

Fig. 1 is a block diagram showing an optical disc system according to one embodiment of the present invention;

Figs. 2A to 2C are signal waveform charts for the explanation of the pits forming;

Fig. 3 is a block diagram showing an asymmetry detecting circuit;

Figs. 4A to 4C are signal waveform charts for the explanation of its operation;

Fig. 5 is a block diagram showing a pulse width control circuit; and

Figs. 6A to 6E are signal waveform charts for the explanation of its operation.

(1) First embodiment

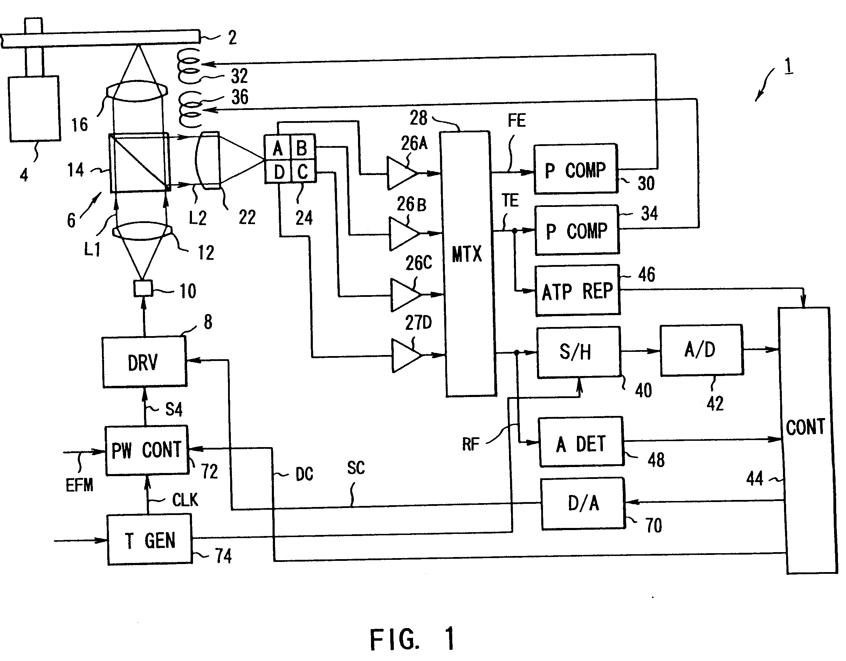

In Fig. 1, 1 denotes the whole optical disc system in which desired information is recorded in the write once read many optical disc 2.

The optical disc system 1 rotates the optical disc 2 at a predetermined rotating speed by driving a spindle motor 4. In this state, the optical pick up 6 is driven to record and reproduce the desired information.

That is, in the optical pick up 6, a laser diode 10 is driven on the basis of a drive signal outputted from a driver 8 and the light beam radiated from the laser diode 10 is converted to a parallel light beam L1 by a lens 12.

Further, in the optical pick up 6, the light beam L1 is led to an object lens 16 through a beam splitter 14, and is concentrated to the optical disc 2 by this object lens 16.

In this manner, in the optical disc system 1, the light beam L1 of the laser diode 10 is focused to the optical disc 2 so as to record and reproduce the desired information.

In the optical pick up 6, a part of the light beam L1 is reflected by the beam splitter 14 to incide into a predetermined light receiving element (not shown). Thus, the optical disc system 1 keeps the quantity of the light beam L1 to the predetermined reference value, on the basis of the output signal of the light receiving element.

Further, in the optical puck up 6, the reflected light L2 of the optical disc 2 is led to the light receiving element 24 through the object lens 16, the beam splitter 14, and a cylindrical lens 22.

Here, the light receiving element 24 divides the light receiving plane into two (they are light receiving planes AB and CD) along the direction of formation of the pits by the optical system of the optical pick up 6.

And furthermore, each light receiving plane is divided into two along the direction orthogonal to the pit forming direction, and the output signals SA to SD of respective light receiving planes A to D are outputted to a matrix circuit 28 via amplifier circuits 26A to 26D.

The matrix circuit 28 forms a focus error signal FE with respect to the output signals SA to SD, by performing an adding and subtracting calculation of the following formula:

$$FE = (SA + SC) - (SR + SD) \quad (1)$$

and the focus error signal FE is outputted to the phase compensating circuit 30.

Hence, in the optical disc system 1, a focus actuator 32 is driven and focus-controlled so that the signal level of the focus error signal FD becomes "0" level.

Similarly, the matrix circuit 28 forms a tracking error signal TE with respect to the output signals SA to SD, by performing an adding and subtracting calculation of the following formula:

$$TE = (SA + SD) - (SB + SC) \quad (2)$$

and the tracking error signal TE is outputted through the phase compensating circuit 34 to a tracking actuator 36 to be driven and tracking-controlled so that the signal level of the tracking error signal TE becomes "0" level.

An ATP reproducing circuit 46, in the reproduction mode, reproduces the recorded data, which is recorded to the predetermined area of the optical disc 2 so as to superimpose on the tracking error signal TE, and outputs the reproduced data to the control circuit 44.

In this manner, in the control circuit 44, before the quantity of light is adjusted in the testing area, the recommended quantity of the light beam L1, which is recorded in the optical disc 2 previously, can be detected on the basis of the reproduced data. And in the case of this embodiment, the pits are sequentially formed by the light beam L1 of the recommended quantity of light.

Further, the matrix circuit 28 forms the reproduced signal RF by performing the adding calculation of the following formula:

$$RF = SA + SD + SB + SC \quad (3)$$

and outputs the reproduced signal RF to the predetermined signal processing circuit.

Hence, in the optical disc system 1, on reproduction, the recording data can be reproduced on the basis of the reproduced signal RF.

On the contrary, on recording, the optical disc system 1 outputs the reproduced signal RF to an analog/digital converting circuit (A/D) 42 via a sample hold circuit 40, and herein, the reproduced signal RF is converted into a digital signal and is supplied to the control circuit 44.

In this manner, in the optical disc system 1, on recording, the pulse width of the light beam L1 is controlled on the basis of the signal level of the reproduced signal RF, therefore, asymmetry is kept to the optimum value.

That is, in this type of the optical disc, there is a case where the organic colouring thin film is different between the inner inside periphery and the outer periphery. In the optical disc system, there is also a case where the wavelength of the light beam is changed due to temperature change, and in the optical disc 2, when the wavelength of the light beam is changed, the sensitivity is changed.

For this reason, in this type of optical disc system, if the data is recorded at a fixed quantity of light set in the check area, the asymmetry may be deteriorated.

Therefore, in this embodiment, the quantity of the reflected light L2 is monitored on recording, and the pulse width of the light beam L1 is controlled on the basis of the monitored results.

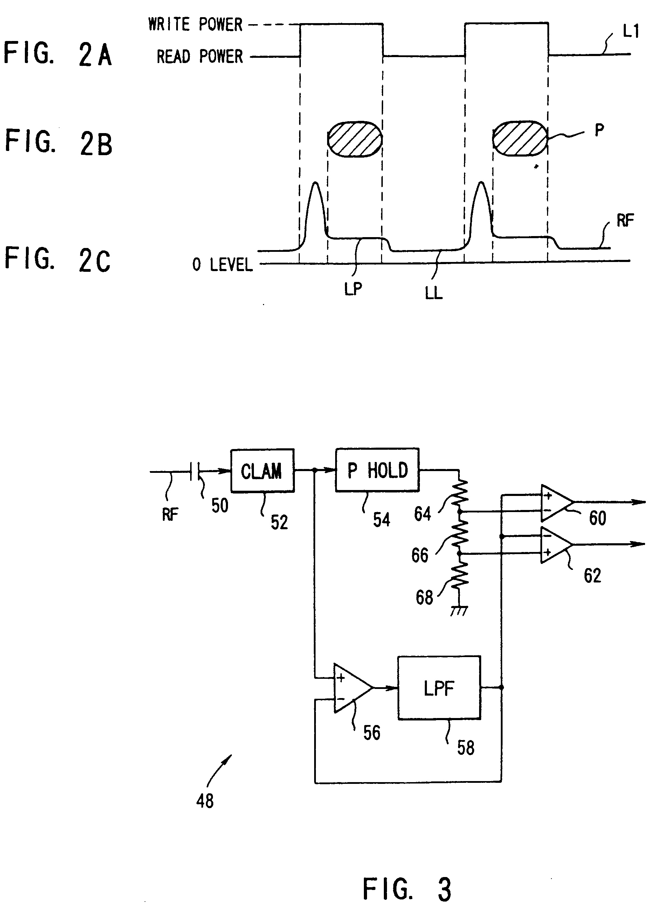

That is, as shown in Fig. 2, in the optical disc system 1, the light beam L1 is radiated at the recommended recording quantity of light on recording (hereinafter, the quantity of light at this time is referred to as the "write power") and then, the light beam L1 is radiated with the reproducing quantity of light (hereinafter, the quantity of light at this time is referred to as the "read power"). By repeating this operation in accordance with the recording data, each pits P is formed sequentially (Figs. 2A and 2B).

At this time, in the optical disc 2, the radiation of the light beam L1 starts and the temperature of the organic colouring thin film rises so as to form the pits P. Thus, the quantity of the reflected light becomes high at the start of radiation when the light beam L1 is radiated with the write power, and in contrast, as the pits are formed, the quantity of the reflected light lowers.

Therefore, in the reproduced signal RF (Fig. 2C) detecting the quantity of the reflected light, at the start time of radiation of the light beam L1 with the write power, the signal level rises sharply and then falls to the fixed value (hereinafter, this level is referred to as the "pits level LP") and then, the signal level falls to the signal level LL of the read power (hereinafter, this level is referred to as the "land level").

Hence, in the control circuit 44, on data recording, the pits level LP is sequentially detected on the basis of the pits level LP detected in the check area, so that the pulse width of the light beam L1 is controlled on the basis of the detected results.

To be specific, when the pits level falls (that is, the state that the asymmetry is negative), in the control circuit 44, the radiation time of the light beam L1 lengthens. In contrast, when the pits level LP rises (that is, the state that the asymmetry is positive), the radiation time of the light beam L1 shortens. Thus, the asymmetry is kept to the optimum value.

On the contrary, when the pits are formed in the testing area, a system control circuit 44 detects the pulse width of the light beam L1 that is necessary to keep the asymmetry to the optimum value constant at the asymmetry detecting circuit 48.

That is, as shown in Fig. 3, the asymmetry detecting circuit 48 inputs the reproduced signal RF into a clamp circuit 52 via a coupling capacitor 50, and the output signal of the clamp circuit 52 is peak held at the peak hold circuit 54.

In this manner, as shown in Figs. 4A to 4C, the asymmetry detecting circuit 48 detects the amplitude of the reproduced signal RF.

The comparison circuit 56 inputs the output signal of the clamp circuit 52 to the non-inverting input port, and feedbacks the output signal to the inverting input port via a low pass filter circuit (LPF) 58.

Therefore, the comparison circuit 56 detects the centre value of the reproduced signal RF.

Further, the asymmetry detecting circuit 48 divides the voltage of the amplitude detected results of the peak hold circuit 54 at the voltage divider circuit of resistors 64 to 68, and outputs them to the comparison circuits 60 and 62. The comparison circuits 60 and 62 obtain the comparison results between the divided voltage and the centre value detected results, and then output these compared results to the control circuit 44.

In this way, the control circuit 44 judges whether the asymmetry is suited or not on the basis of the actual reproduced signal RF.

That is, when the output signal of the comparison circuit 60 arises, it can be judged that the divided voltage, which is determined by the dividing ratio of the resistors 64 to 68, falls with respect to the centre value. Therefore, it can be judged that the centre value arises with respect to the amplitude of the reproduced signal RF.

Specifically, as shown in Fig. 4A, it can be judged that the write power is small in this case, and if the pulse width of the light beam L1 is lengthened, the asymmetry can be corrected.

On the contrary, when the output signal level of the comparison circuit 62 arises, it can be judged that the divided voltage, which is determined by the dividing ratio of the resistors 64 to 68, rises with respect to the centre value. Therefore, it can be judged that the centre value falls with respect to the amplitude of the reproduced signal RF.

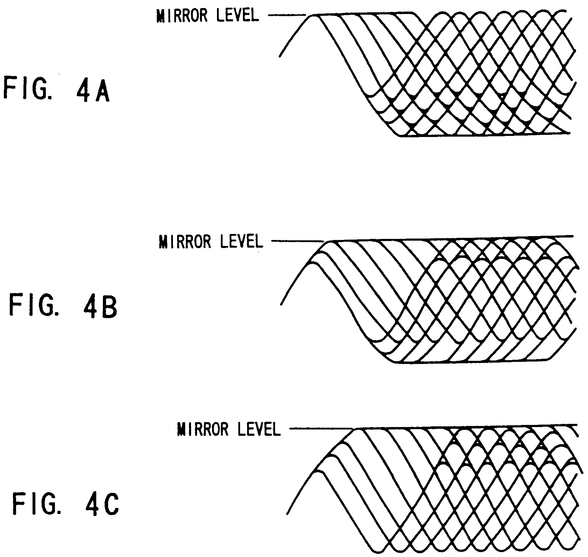

That is, as shown in Fig. 4C, it can be judged that the write power is large in this case, and if the pulse width of the light beam L1 is shortened, the asymmetry can be corrected.

On the contrary, when neither the output signal of the comparison circuit 60 nor the output signal of the comparison circuit 62 arise, it can be judged that the centre value is kept to the predetermined level with respect to the amplitude of the reproduced signal RF. And, as shown in Fig. 4B, it can be judged that the write power is optimum.

Hence, in the control circuit 44, after the pulse width of the light beam L1 is sequentially changed in the testing area to form the pits, the mode is switched to the reproducing mode, and the detected result of the asymmetry circuit 48 is monitored. Then, the pulse width of the light beam L1 is selected and set.

Further, in the control circuit 44, at the same time, the pits level LP such that the asymmetry is optimum value is detected, and this pits level LP is set as the control goal value.

Furthermore, in the control circuit 44, the recording data is recorded with the pulse width set in the testing area at the time of next data recording, and at the same time, the pits level LP is detected on the basis of the output data of the analog/digital converting circuit 42. Then, the pulse width of the light beam L1 is corrected on the basis of the detected result.

In this way, in the optical disc system 1, the pulse width is changed and the asymmetry is kept to the optimum value, while the quantity of the light beam L1 is kept to the recommended value.

That is, in the control circuit 44, a control signal SC is outputted to a laser driver 8 via the digital/analog converting circuit (D/A) 70, and the write power and read power of the light beam L1 are kept to the recommended value by this control signal SC.

Moreover, in the control circuit 44, a control data DC is outputted to the pulse width control circuit 72, and the pulse width of the light beam L1 is controlled by this control data DC.

The pulse width control circuit 72 operates based on the clock signal CLK outputted from a timing generating circuit 74, and generates a recording signal S4 on the basis of a modulating signal EFM (composed of the EFM modulated digital signal consisting of the recording signal of the compact disc in this case) outputted from the predetermined signal processing circuit.

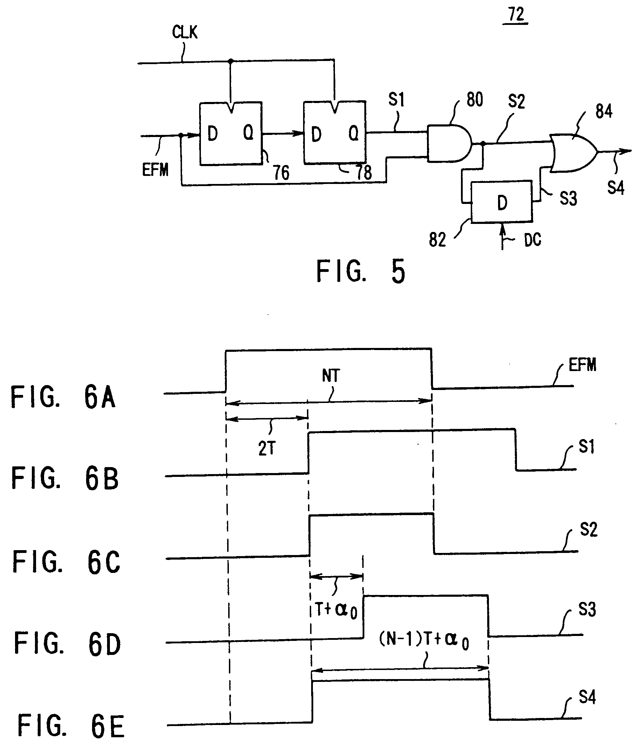

Specifically, as shown in Figs. 5 and 6, the pulse width control circuit 72 is received the modulating signal EFM (Fig. 6A) to latch circuits 76 and 78 operating on the basis of the clock signal CLK sequentially, and generates a recording signal S1 which is delayed for the period 2T with respect to the modulating signal EFM (Fig. 6B). Here, T is the minimum reference unit of a recording signal S1 of a compact disc, in which the recording signal is generated with the pulse width ranging from 3T to 11T.

Further, the pulse width control circuit 72 supplies the delay signal S1 to the AND circuit 80, in which the conjunction (AND) is obtained between the delay signal S1 and the modulating signal EFM so as to generate an output signal S2 of the pulse width (N-2)T shorter than the pulse width NT of the modulating signal EFM for the period 2T (Fig. 6C).

Furthermore, the pulse width control circuit 72 outputs the output signal S2 to the delay circuit (D) 82, which outputs a delay signal S3 of the output signal S2 to an OR circuit 84.

Here, the delay circuit 82 switches a delay time $\alpha$ in accordance with the control data DC within a range of time T to 2T. The OR circuit 84 outputs an OR signal S4 of the delay signal S3 and the output signal S2 (Fig. 6E).

In this way, the OR signal S4 is the OR signal of the output signal S2 of the pulse width (N-2)T and the delay signal S3, which is delayed for the time $\alpha$ from the output signal S3. Therefore, regarding the modulating signal EFM of the pulse width NT, the pulse width is represented as follows:

$$(N - 2) T + \alpha = (N - 1) T + \alpha_0$$
$$= T + \alpha_0 \quad (4)$$

In the control circuit 44, the pulse width of the modulating signal EFM is adjusted so that an asymmetry is to the optimum value and the recording signal S4 is generated. During the period that the recording signal S4 arises, the light beam AI is kept to the write power.

In the control circuit 44, for example, the modulating signal EFM, a signal level of which switches with the pulse width 4T in the testing area, is inputted to the pulse width control circuit 72 and the delay time of the delay circuit 82 is sequentially changed in this state to form the pits. Then, the delay time is selected from these pits so that the asymmetry is to the optimum value so as to set the pulse width of the light beam.

Further, in the control circuit 44, on recording, the delay time of the delay circuit 72 is set to a time detected in the testing area. Thus, a pulse width of the light beam L1 is changed for the pulse width detected in the check area and the modulating signal EFM is recorded. And at this time, the pulse width is corrected on the basis of the detected result of the pits level LP.

Thus, in the optical disc system 1, the quantity of the light beam L1 is kept to the recommended value and the asymmetry can be held to the optimum value, and the shortening of the life time of the laser diode 10 accompanying the change of the quantity of the light beam L1 is prevented previously.

Moreover, in the optical disc system 1, the quantity of the light beam L1 is kept to the recommended value so that a coupling efficiency of the laser diode 10 can be lowered, and a beam diameter at the time of data recording is smaller due to this reduction of efficiency. Thus, pits can be formed surely, and a bit error on reproduction can be reduced.

With the above construction, in the testing area, the pulse width of the light beam L1 is sequentially changed to form the pits, while the quantity of the light beam L1 is kept to the recommended value, thereafter, the mode is switched to the reproduction mode and the pulse width is selected so that the asymmetry is to the optimum value, and at the same time, the pits level is detected. Then, on data recording, the pulse width of the light beam L1 detected in the testing area on the basis of the pits level detected results is corrected and recorded so that the asymmetry can be kept to the optimum value, while the quantity of the light beam L1 is kept to a constant value. Therefore, the shortening of the life time of the laser diode 10 can be prevented previously.

(2) Second embodiment

In the embodiment described above, before the pits for data recording is formed on the data recording area, the pits for asymmetry detecting is formed on the testing area and the pits for asymmetry detecting is reproduced so as to determine the pulse width of the necessary write pulse width to be supplied to the light source to form the pits which can be recorded in the state of the present optimum asymmetry. The present invention can be applied to an optical disc without the detecting area.

In this case, in the optical disc system, the pit length is obtained by reproducing the pits for data recording recorded on the optical disc. Then, the detecting asymmetry is obtained on the basis of the obtained pit length and the pulse width of the drive pulse, regarding the pits to be formed next, in order that the deviation between the detecting asymmetry and the optimum asymmetry is not exist.

In the optical disc system of the embodiment, in data recording mode recording the data on the optical disc, the pits, which have the length shorter than the pulse width of a light beam emitted from the light source, is formed on the optical disc. The reflected light is reproduced from the pits formed on the optical disc and the length of pits is detected. Then, in accordance with the deviation between the asymmetry obtained based on the detected results and the reference asymmetry, the drive pulse width to be supplied to the light source is controlled. Thus, the length of pits to be formed on the optical disc at next time becomes the value which has no deviation with the reference asymmetry.

According to the above construction, the pits can be formed surely on the optical disc such that the asymmetry becomes optimum value to adjust the present temperature of the optical disc.

(3) Other Embodiments

The embodiment discussed above has dealt with the case where the pulse width detected in the testing area is corrected and the modulating signal is recorded. However, the present invention is not limited to this but, after a delay time of the delay circuit 82 is once set in the testing area, in keeping the asymmetry to the optimum value, the quantity of the light beam may be controlled.

In this manner, the fluctuation of the quantity of light can be reduced in comparison with the case where only the quantity of the light beam is controlled, and due to this reduction, the life time of the laser diode can be extended.

Further, on the contrary to this it may also be that, the quantity of the light, such that the asymmetry is to the optimum value in the testing area, is detected, and on data recording, the light beam is radiated with this quantity of light while the pulse width is corrected and the asymmetry is kept to the optimum value.

The fluctuation of the quantity of light can be also reduced in this way, and the life time of the laser diode can be extended for this reduction of the fluctuation.

Furthermore, the embodiments discussed above have dealt with the case where the optimum value of the asymmetry is detected on the basis of the reproduced signal RF on data recording, and in the testing area, by the asymmetry detecting circuit. However, the present invention is not limited to this but various asymmetry detecting means may be used widely.

Furthermore, the embodiments discussed above have dealt with the case where the delay time of the delay circuit 72 is corrected with the pits level without any relation to the pulse width of the modulating signal on data recording. However, the present invention is not limited to this but the delay time may also be switched in accordance with the pulse width of the modulating signal to correct the pulse width of the light beam.

Furthermore, the embodiments discussed above have dealt with the case where the pulse width of the light beam is controlled by switching the delay time of the delay circuit. However, the present invention is not limited to this but, for example, a clock signal having a high frequency may be counted by a counter circuit, and this count value may be switched to form the recording signal so as to control the pulse width of the light beam.

**Claims**

1. An optical disc system for recording a desired information, by radiating a light beam of predetermined quantity of light to a data recording plane of an optical disc in order to form pits on said data recording plane sequentially, comprising:
   a light source (10) for emitting said light beam (L1);
   an optical system (12,14,16,22) for focusing said light beam to said data recording plane, and at the same time, for receiving the reflected light (L2) of said light beam;
   an asymmetry detecting means (48) for detecting the asymmetry of said pits and outputting the asymmetry detected results on the basis of the light receiving element, which receives said reflected light received at said optical system and outputs the received light results; and
   a control circuit (8,44,72) for controlling the pulse width of said light beam so that said asymmetry is kept to the optimum value, on the basis of the asymmetry detected results: and wherein;
   said asymmetry detecting means contains a reproducing asymmetry detection means for outputting, in the reproduction mode, said asymmetry detected results on the basis of the output signal of said light receiving element, and
   said control circuit controls the whole operation and changes said pulse width so that said pits are sequentially formed by radiating said light beam to said optical disc, thereafter, said control circuit switches the whole operation mode into the reproduction mode and selects and sets said pulse width so that said asymmetry is to the optimum value, and on data recording, sequentially forms said pits on the basis of said selected pulse width.

2. An optical disc system for recording desired information, by radiating a light beam of predetermined quantity of light to a data recording plane of an optical disc in order to form pits on said data recording plane sequentially, comprising:
   a light source for emitting said light beam;
   an optical system for focusing said light beam to said data recording plane, and at the same time, for receiving the reflected light of said light beam;
   an asymmetry detecting means for detecting the asymmetry of said pits and outputting the asymmetry detected results on the basis of the light receiving element, which receives said reflected light received at said optical system and outputs the received light results; and
   a control circuit for controlling the pulse width of said light beam so that said asymmetry is kept to the optimum value, on the basis of the asymmetry detected results: and wherein;
   said asymmetry detecting means contains a recording asymmetry detection means for outputting said asymmetry detected results on the basis of the output signal of said light receiving element, on data recording, and
   said control circuit, on data recording, controls the pulse width of said light beam so that said asymmetry is kept to the optimum value on the basis of said asymmetry detected results of said recording asymmetry detecting means.

3. The optical disc system according to claims 1 or 2, said control circuit thereof comprising:
   a pulse signal generating means for generating a variable pulse-length signal which has a pulse width shorter than the pulse width of the recording signal for a predetermined period;

a delay means for delaying said variable pulse-length signal for a predetermined delay time and outputting a delay signal, and for switching said delay time in accordance with said asymmetry detected results; and

a light source control means for generating said variable pulse-length signal and an OR signal of said delay signal, and for controlling said light source on the basis of said OR signal.

4. A data recording method for recording a desired data by radiating a light beam of predetermined quantity of light to a data recording plane in order to form pits, said data recording method comprising steps of:

forming sequentially a plurality of pits for testing by providing a plurality of write drive pulses, having different pulse width each other in a testing area, to a light source;

detecting the asymmetry of respective pits by reproducing said pits for testing in said testing area by means for detecting reproduction asymmetry;

selecting and setting a pulse width corresponding to said pits for testing, having the pulse of which the asymmetry becomes optimum value on data recording, among said asymmetry; and

recording the data into an optical disc by the write drive pulse of said selected pulse.

5. A data recording method for recording a desired data by radiating a light beam of predetermined quantity of light to a data recording plane in order to form pits, said data recording method comprising steps of:

recording the data on said optical disc by providing the write drive pulse to the light source in order to form the pits on said optical disc;

reproducing said formed pits on said optical disc, detecting the length of said pits, and obtaining the asymmetry of said reproduced pits on the basis of the detected length of pits;

obtaining the deviation between the pulse width of the write drive pulse. which is used when said reproduced pits are formed, and the pulse width corresponding to the optimum asymmetry, by comparing the asymmetry of said reproduced pits with the reference asymmetry;

changing the pulse width of the write drive pulse such that the deviation becomes "0"; and

repeating steps described above.

FIG. 1

EP 0 580 420 A1

FIG. 2A

FIG. 2B

FIG. 2C

FIG. 3

MIRROR LEVEL

FIG. 4A

MIRROR LEVEL

FIG. 4B

MIRROR LEVEL

FIG. 4C

FIG. 5

FIG. 6A

FIG. 6B

FIG. 6C

FIG. 6D

FIG. 6E

EP 0 580 420 A1

European Patent Office

**EUROPEAN SEARCH REPORT**

Application Number

EP 93 30 5739

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 393 001 (IBM CORP) <br> * the whole document * | 1,2,5 | G11B7/125 <br> G11B7/00 |
| Y | | 3 | |
| A | | 4 | |
| Y | US-A-4 425 637 (TANAKA ET AL) <br> * the whole document * <br> --- | 3 | |
| A | EP-A-0 446 892 (MATSUSHITA ELECTRIC IND CO) <br> * column 11, line 14 - column 13, line 49; figures 10,13 * <br> --- | 1,2,4,5 | |
| A | EP-A-0 126 682 (THOMSON-CSF) <br> * abstract * <br> ----- | 1,2,4,5 | |
| | | | **TECHNICAL FIELDS SEARCHED (Int.Cl.5)** <br><br> G11B |

The present search report has been drawn up for all claims

| Place of search | Date of completion of the search | Examiner |
|---|---|---|
| THE HAGUE | 5 November 1993 | ANNIBAL, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13